# EUROPEAN PATENT APPLICATION

(11) **EP 4 446 701 A1**
(43) Date of publication of application: **16.10.2024**
(21) Application number: 22921299.8
(22) Date of filing: 25.03.2022
(51) Int. Cl.: G01C 21/00

(54) **HIGH-DEFINITION ROAD MAP GENERATION METHOD, APPARATUS AND DEVICE, AND STORAGE MEDIUM**

(30) Priority: 19.01.2022 CN 202210057248
(71) Applicant: Zhejiang Geely Holding Group Co., Ltd., Hangzhou, Zhejiang 310000 (CN); Geely Automobile Research Institute (Ningbo) Co., Ltd, Ningbo, Zhejiang 315000 (CN)
(72) Inventor: JIN, Chen, Hangzhou, Zhejiang 310000 (CN); LU, Hongxi, Hangzhou, Zhejiang 310000 (CN); DENG, Wenwu, Hangzhou, Zhejiang 310000 (CN); HENG, Yang, Hangzhou, Zhejiang 310000 (CN); ZHOU, Junjie, Hangzhou, Zhejiang 310000 (CN); YU, Shu, Hangzhou, Zhejiang 310000 (CN); CHEN, Yong, Hangzhou, Zhejiang 310000 (CN); LI, Zhicheng, Hangzhou, Zhejiang 310000 (CN); REN, Xiangfei, Hangzhou, Zhejiang 310000 (CN); SHI, Xiaoming, Hangzhou, Zhejiang 310000 (CN)
(74) Representative: Osterhoff, Utz
(86) International application number: PCT/CN2022/083066
(87) International publication number: WO 2023/137865

(57) **Abstract**

Disclosed are a method for generating a high-precision road map, a high-precision road map generation device, equipment and a storage medium. The method includes: based on a constant temperature control system, collecting a plurality of road information to be processed by different sensors (S10), so that the different sensors can all operate at a suitable temperature and are not affected by the environment; performing feature extraction on the plurality of the road information to be processed, and obtaining road feature information (S20); and connecting a mileage meter by a vehicle controller area network port or a related domain controller to obtain mileage information of the vehicle and posture control information of the vehicle, and predicting the posture of the vehicle to provide auxiliary information for an inertial system, and finally generating a high-precision road map according to the road feature information, vehicle body posture control information of a vehicle and mileage information (S30).

## Description

### CROSS-REFERENCE TO RELATED APPLICATIONS

This application claims priority to Chinese Patent Application No. 202210057248.6, filed on January 19 2022. The disclosure of the above-mentioned application is incorporated herein by reference in its entirety.

### TECHNICAL FIELD

The present application relates to the technical field of vehicle, and in particular to a method for generating a high-precision road map, a high-precision road map generation device, a high-precision road map generation equipment and a storage medium.

### BACKGROUND

With the development of autonomous driving and technological iteration, the mass production of autonomous driving vehicles is getting closer and closer. In order for the autonomous driving system to better understand its own posture during automatic operation, and to carry out accurate behavior planning and body control, high-precision positioning is very important. There are currently two ways to realize the high-precision positioning function recognized by the industry. One way is a high-precision positioning system based on a combination of satellite positioning and inertial navigation systems, this positioning system relies on fixed-frequency multi-satellite communication to achieve positioning, and uses inertial navigation for position estimation when satellite communication is not available in some areas such as tunnel elevated areas. Another way is to carry out map collection through a single sensor such as laser and vision or through multi-sensor fusion (vision, laser, millimeter wave and so on), and use the mapping tool chain for mapping at the same time, and the autonomous driving system uses sensors to perform feature matching to achieve vehicle positioning when running on the road. However, the above two ways have errors in autonomous driving positioning, so that the autonomous driving vehicle cannot be performed high-precision positioning.

The above content is only used to assist in understanding the technical solution of this application, and does not mean that the above content is recognized as prior art.

### SUMMARY

The main purpose of the present application is to provide a method for generating a high-precision road map, a high-precision road map generation device, a high-precision road map generation equipment and a storage medium, aiming to solve the technical problem of enabling the autonomous driving vehicle to precisely position based on a high-precision road map.

To achieve the above purposes, the present application provides a method for generating a high-precision road map, and the method includes:
collecting a plurality of road information to be processed;
performing feature extraction on the plurality of the road information to be processed, and obtaining road feature information; and
generating a high-precision road map according to the road feature information, vehicle body posture control information of a vehicle and mileage information.

In an embodiment, the collecting the plurality of the road information to be processed includes:
in response to receiving a sensor control instruction, determining an information collection timestamp according to the sensor control instruction; and
collecting the plurality of the road information to be processed according to the information collection timestamp.

In an embodiment, the collecting the plurality of the road information to be processed according to the information collection timestamp includes:
collecting a plurality of initial road information according to the information collection timestamp;
obtaining road sampling frequency information corresponding to each initial road information respectively;
determining whether the road sampling frequency information meets a preset frequency condition; and
in response to that the road sampling frequency information meets the preset frequency condition, treating the plurality of the initial road information as the plurality of the road information to be processed.

In an embodiment, after the determining whether the road sampling frequency information meets the preset frequency condition, the method further includes:
in response to that the road sampling frequency information does not meet the preset frequency condition, adjusting the road sampling frequency information according to a preset rule, and obtaining target sampling frequency information; and
collecting the plurality of the road information to be processed according to the target sampling frequency information.

In an embodiment, the road information to be processed includes road images to be processed and point cloud data to be processed;
the performing feature extraction on the plurality of the road information to be processed, and obtaining the road feature information includes:
determining whether current weather information meets a preset weather condition;
in response to that the current weather information meets the preset weather condition, extracting a plurality of the road images to be processed from the plurality of the road information to be processed;
converting the plurality of the road images to be processed respectively, and obtaining a plurality of road point cloud data; and
performing feature extraction on the plurality of the road point cloud data and the plurality of the point cloud data to be processed, and obtaining the road feature information.

In an embodiment, after the determining whether the current weather information meets the preset weather condition, the method further includes:
in response to that the current weather information does not meet the preset weather condition, extracting the plurality of the point cloud data to be processed from the plurality of the road information to be processed;
converting the plurality of the road images to be processed and the plurality of the point cloud data to be processed respectively, and obtaining a plurality of road pixel information; and
performing feature extraction on the plurality of the road pixel information, and obtaining the road feature information.

In an embodiment, the generating the high-precision road map according to the road feature information, the vehicle body posture control information of the vehicle and the mileage information includes:
determining predicted vehicle body posture control information of the vehicle according to the vehicle body posture control information and the mileage information;
determining inertial navigation auxiliary information of the vehicle according to the predicted vehicle body posture control information; and
generating the high-precision road map according to the road feature information and the inertial navigation auxiliary information.

In addition, in order to achieve the above purposes, the present application also proposes a high-precision road map generation device, including:
a collection module, configured to collect a plurality of road information to be processed;
an extraction module, configured to perform feature extraction on the plurality of the road information to be processed and obtain road feature information; and
a generation module, configured to generate a high-precision road map according to the road feature information, vehicle body posture control information of a vehicle and mileage information.

In addition, in order to achieve the above purposes, the present application also proposes a high-precision road map generation equipment, the high-precision road map generation equipment includes: a memory, a processor and a high-precision road map generation program stored in the memory and executable on the processor, and the high-precision road map generation program is configured to implement the method for generating the high-precision road map as described above.

In addition, in order to achieve the above purposes, the present application also proposes a storage medium, a high-precision road map generation program is stored on the storage medium, and the steps of the method for generating the high-precision road map as described above are implemented when the high-precision road map generation program is executed by a processor.

The present application firstly collects a plurality of road information to be processed; performs feature extraction on the plurality of the road information to be processed, and obtains road feature information; and then, generates a high-precision road map according to the road feature information, vehicle body posture control information of a vehicle and mileage information. The prior art performs vehicle positioning based on a high-precision positioning system composed of a satellite positioning system and an inertial navigation system, but this method may result in inaccurate vehicle positioning. Compared with the prior art, in this embodiment, performing feature extraction according to the collected road information to be processed to obtain road feature information, and then generating a high-precision road map according to the road feature information, vehicle body posture control information of a vehicle and mileage information, so that the autonomous driving vehicle can be precisely positioned based on the high-precision road map, thereby improving the driver's experience of autonomous driving.

### BRIEF DESCRIPTION OF THE DRAWINGS

FIG. 1 is a structural schematic view of a high-precision road map generation equipment of a hardware operating environment involved in an embodiment according to the present application.
FIG. 2 is a schematic flow chart of a method for generating a high-precision road map according to a first embodiment of the present application.
FIG. 3 is a map update principle diagram of the method for generating the high-precision road map according to the first embodiment of the present application.
FIG. 4 is a schematic flow chart of a method for generating a high-precision road map according to a second embodiment of the present application.
FIG. 5 is a structural block diagram of a high-precision road map generation device according to the first embodiment of the present application.

The realization of the purpose, functional features and advantages of the present application will be further described with reference to the embodiments and the accompanying drawings.

### DETAILED DESCRIPTION OF THE EMBODIMENTS

It should be understood that the specific embodiments described here are only used to explain the present application and are not intended to limit the present application.

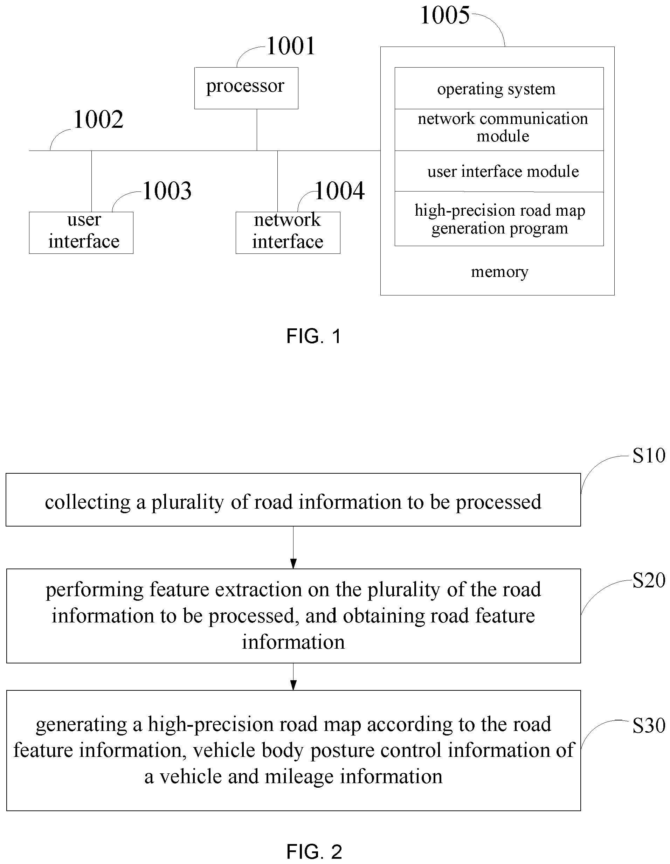

Referring to FIG. 1, FIG. 1 is a structural schematic view of a high-precision road map generation equipment of a hardware operating environment involved in an embodiment according to the present application.

As shown in FIG. 1, the high-precision road map generation equipment may include: a processor 1001, such as a central processing unit (CPU), a communication bus 1002, a user interface 1003, a network interface 1004 and a memory 1005, the communication bus 1002 is used to realize connection communication between these components. The user interface 1003 may include a display and an input unit such as a keyboard, the optional user interface 1003 may also include a standard wired interface and a wireless interface. The network interface 1004 may optionally include a standard wired interface or a wireless interface (such as a Wireless-Fidelity (WI-FI) interface). The memory 1005 may be a high-speed random access memory (RAM) or a stable non-volatile memory (NVM), such as a disk memory. The memory 1005 may optionally be a storage device independent of the aforementioned processor 1001.

Those skilled in the art can understand that the structure shown in FIG. 1 does not constitute a limitation to the high-precision road map generation equipment, and may include more or fewer components than shown, or a combination of certain components, or differently arranged components.

As shown in FIG. 1, memory 1005 as a storage medium may include an operating system, a network communication module, a user interface module and a high-precision road map generation program.

In the high-precision road map generation equipment shown in FIG. 1, the network interface 1004 is mainly used for data communication with the network server; the user interface 1003 is mainly used for data interaction with the user; the processor 1001 and the memory 1005 in the high-precision road map generation equipment of the present application can be provided in the high-precision road map generation equipment, the high-precision road map generation equipment calls the high-precision road map generation program stored in the memory 1005 by the processor 1001 and executes the method for generating the high-precision road map provided by the embodiment of the present application.

An embodiment according to the present application provides a method for generating the high-precision road map, referring to FIG. 2, which is a schematic flow chart of a method for generating a high-precision road map according to the first embodiment of the present application.

In this embodiment, the method for generating the high-precision road map includes the following steps:
Step S10: collecting a plurality of road information to be processed.

It is easy to understand that the execution subject of this embodiment can be a high-precision road map generation equipment with functions such as data processing, network communication and program running, or other computer equipment with similar functions, etc., and this embodiment does not limit it.

The multiple road information to be processed is road images or road point cloud data collected by multiple different sensors. The multiple different sensors can be single visual sensor or multiple visual sensors, single high-process wire beam laser radar or multiple high-process wire beam laser radars, millimeter wave radars, etc.

The road information collected by the visual sensor is a road image, and the road information collected by the laser radar or millimeter wave radar is road point cloud data, etc.

In this embodiment, in order to unify the sampling frequency of multiple different sensors, the processing method for collecting the plurality of the road information to be processed can be: in response to receiving a sensor control instruction, determining an information collection timestamp according to the sensor control instruction; and collecting the plurality of the road information to be processed according to the information collection timestamp.

The sensor control instruction can be understood as a control instruction generated by unifying the sampling frequencies of multiple different sensors by triggering and timing according to inertial navigation auxiliary information using the Global Positioning System (GPS) and the Inertial Measurement Unit (IMU).

In a specific implementation, the processing method of collecting the plurality of the road information to be processed according to the information collection timestamp is: collecting a plurality of initial road information according to the information collection timestamp; obtaining road sampling frequency information corresponding to each initial road information respectively; determining whether the road sampling frequency information meets a preset frequency condition; and in response to that the road sampling frequency information meets the preset frequency condition, treating the plurality of the initial road information as the plurality of the road information to be processed. The preset frequency condition can be understood that the road sampling frequency information corresponding to multiple different sensors is consistent.

Information collection timestamp can be understood as the information collection setting time, etc. In this implementation, there are three ways to collect road information: first, using a single visual sensor or multiple visual sensors to collect road information; second, using a single high-process wire beam laser radar or multiple high-process wire beam laser radars to collect road information; third, using a variety of different sensors (laser radar, 4D millimeter wave radar, visual sensor, etc.) to collect road information. The high-precision map produced by the multi-sensor fusion solution has a natural accuracy advantage. By using the complementary advantages of different sensors, different road features can be collected. The high-precision map produced will be faster and more precise when the autonomous driving system performs positioning and feature matching.

In the specific implementation, in response to that the road sampling frequency information does not meet the preset frequency condition, adjusting the road sampling frequency information according to a preset rule, and obtaining target sampling frequency information; and then, collecting the plurality of the road information to be processed according to the target sampling frequency information. The preset rule can be triggered by using GPS and IMU, and timing multiple different sensors. It should also be understood that the multi-sensor spatiotemporal synchronization mechanism can ensure the synchronization and real-time performance of data for multiple sensors even when the sampling frequencies are different.

Step S20: performing feature extraction on the plurality of the road information to be processed, and obtaining road feature information.

The road feature information may be road lane line feature information, road obstacle feature information, building feature information on both sides of the road, and so on.

In this embodiment, in order to obtain more accurate road feature information, the performing feature extraction on the plurality of the road information to be processed, and obtaining the road feature information may be: determining whether current weather information meets a preset weather condition; in response to that the current weather information meets the preset weather condition, extracting a plurality of the road images to be processed from the plurality of the road information to be processed. The road information to be processed includes road images to be processed and point cloud data to be processed. After that, converting the plurality of the road images to be processed respectively, and obtaining corresponding multiple road point cloud data. Finally, performing feature extraction on the plurality of the road point cloud data and the plurality of the point cloud data to be processed, and obtaining the road feature information.

The preset weather condition can be understood as the current weather information being sunny weather information. It should be understood that when the current weather information is sunny weather information, the collected multiple road information to be processed can be converted into corresponding point cloud data, so as to obtain more accurate road feature information according to the point cloud data.

Step S30: generating a high-precision road map according to the road feature information, vehicle body posture control information of a vehicle and mileage information.

It should be noted that the road feature information contains multiple lane line feature information, multiple bilateral road building feature information, and multiple road obstacle information. After that, the multiple lane line feature information, multiple bilateral road building feature information, and multiple road obstacle information can be fused or complemented to obtain the integrated road feature information. Then, generating the high-precision road map according to the integrated road feature information, the vehicle body posture control information of the vehicle and the mileage information.

For example, the road feature information exists missing lane line feature information A1 and missing lane line feature information A2, and the missing lane line feature information A1 and the missing lane line feature information A2 belong to the same lane line, but the missing positions are different. The missing lane line feature information A1 and the missing lane line feature information A2 can be complemented and fused to obtain the complete lane line feature information A.

It should also be noted that the vehicle can be understood as an autonomous driving vehicle, and the vehicle body posture control information can be vehicle data generated by the vehicle during autonomous driving, such as vehicle acceleration and vehicle acceleration direction. The mileage information of the vehicle can be the mileage information provided by connecting the vehicle data channel and then connecting the mileage meter from the vehicle Controller Area Network (CAN) or related domain controller for the high precision map acquisition system.

In a specific implementation, the vehicle body posture control information of the vehicle can also be obtained by connecting the vehicle data channel and then connecting the mileage meter from the vehicle CAN port or related domain controller. By connecting the high precision map and the vehicle via the data communication interface with the vehicle, on the one hand, partial information of the vehicle can be double-checked with real-time acquisition, and on the other hand, multi-source information can be added to the system by using the mileage meter.

In this embodiment, determining predicted vehicle body posture control information of the vehicle according to the vehicle body posture control information and the mileage information; determining inertial navigation auxiliary information of the vehicle according to the predicted vehicle body posture control information; and it can generate the high-precision road map according to the road feature information and the inertial navigation auxiliary information.

Predicted vehicle body posture control information can be understood as predicting the posture of the vehicle in advance according to mileage information and vehicle body posture control information of the vehicle. The inertial navigation auxiliary information is auxiliary information provided to the inertial navigation system according to the advance prediction of the vehicle's posture.

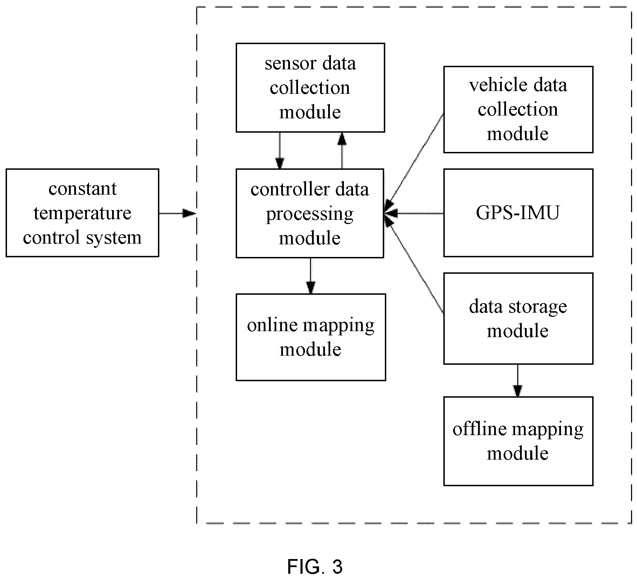

Referring to FIG. 3, which is a map update principle diagram of the method for generating the high-precision road map according to the first embodiment of the present application. FIG. 3 includes a constant temperature control system, a sensor data collection module, a controller data processing module, a vehicle data collection module, a GPS-IMU (Global Positioning System - Inertial Measurement Unit), a data storage module, an online mapping module, and an offline mapping module. The constant temperature control system can ensure the overall temperature and operating efficiency of the system, etc. The constant temperature control system adds a heating wire, a cooling system, a multi-point temperature detector, etc., so that different sensors can operate at a suitable temperature without being affected by the environment. The vehicle data collection module can obtain the vehicle body posture control information and mileage information of the vehicle. The controller data processing module includes data processing, sensor timing, map drawing, map update, management of multi-sensor power supply and constant temperature system power supply, etc. A display system can also be added to view the collected content in real time so that engineers can help with process revision and correction, etc. An online mapping channel (high-precision map) can be added, thus, not only can the road features be stored and transferred by hard disk for offline mapping, but also mapping while collecting the map by online channels. The sensor data collection module includes high-beam laser radar, visual camera, 4D millimeter wave radar, V2X information, etc., which can realize the collection of road information such as visual features, laser point cloud features, millimeter wave radar features, etc., thus collecting road section information in multiple dimensions, and establishing more comprehensive high-precision map feature information.

It should also be noted that if the background needs to update the map in real time, it is necessary to update the original map previously obtained according to the constant temperature control system, the sensor data collection module, the controller data processing module, vehicle data collection module, GPS-IMU, and data storage module.

In this embodiment, firstly, collecting a plurality of road information to be processed; performing feature extraction on the plurality of the road information to be processed, and obtaining road feature information; and then, generating a high-precision road map according to the road feature information, vehicle body posture control information of a vehicle and mileage information. The prior art performs vehicle positioning based on a high-precision positioning system composed of a satellite positioning system and an inertial navigation system, but this method may result in inaccurate vehicle positioning. Compared with the prior art, in this embodiment, performing feature extraction according to the collected road information to be processed to obtain road feature information, and then generating a high-precision road map according to the road feature information, vehicle body posture control information of a vehicle and mileage information, so that the autonomous driving vehicle can be precisely positioned based on the high-precision road map, thereby improving the driver's experience of autonomous driving.

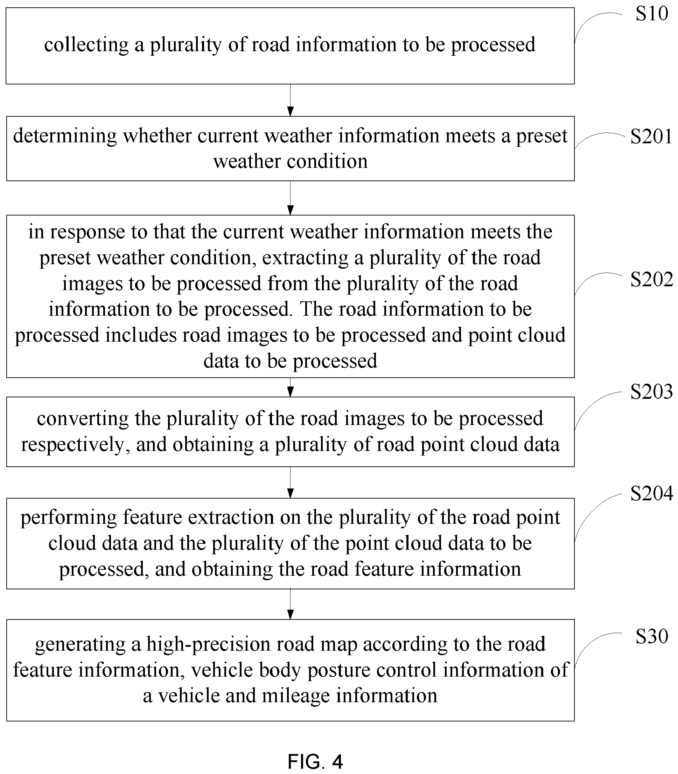

Referring to FIG. 4, which is a schematic flow chart of a method for generating a high-precision road map according to a second embodiment of the present application.

Based on the above first embodiment, in this embodiment, the step S20 further includes:
Step S201: determining whether current weather information meets a preset weather condition.

The preset weather condition can be understood as the current weather information being sunny weather information. The current weather information may be foggy weather information, rainy weather information, sunny weather information, etc.

In this embodiment, the current environment image can be captured by a camera, and then performing weather analysis on current environment image, and obtaining the corresponding current weather information according to the weather analysis result.

The processing method for performing weather analysis on the current environment image can be to extract environmental feature information, can be to match the consistent sample environmental feature information from the preset weather mapping relationship table according to the environmental feature information, and then the sample weather information is determined according to the sample environmental feature information, and then the sample weather information is used as the current weather information.

Step S202: in response to that the current weather information meets the preset weather condition, extracting a plurality of the road images to be processed from the plurality of the road information to be processed. The road information to be processed includes road images to be processed and point cloud data to be processed.

In this embodiment, if the current weather information is sunny weather information, then multiple road images to be processed in the collected multiple road information to be processed can be processed, and the road images to be processed can be processed; when the current weather information is not sunny weather information, and the current weather information is foggy weather information and rainy weather information, it is necessary to extract multiple point cloud data to be processed from the multiple road information to be processed, and then convert the multiple road images to be processed and the multiple point cloud data to be processed to obtain the corresponding multiple road pixel information, perform feature extraction on the multiple road pixel information, and obtain the road feature information, etc.

Step S203: converting the plurality of the road images to be processed respectively, and obtaining a plurality of road point cloud data.

Assuming that there are road image to be processed B and road image to be processed C, it is necessary to convert the road image to be processed B and the road image to be processed C, and obtain road point cloud data corresponding to the road image to be processed B and the road point cloud data corresponding to the road image to be processed C.

Step S204: performing feature extraction on the plurality of the road point cloud data and the plurality of the point cloud data to be processed, and obtaining the road feature information.

The road feature information may be lane line feature information, bilateral road building feature information, road obstacle information, etc. It should be noted that feature extraction may be performed on the plurality of road point cloud data and the plurality of point cloud data to be processed to obtain road feature information corresponding to the plurality of road point cloud data and the plurality of point cloud data to be processed.

In this embodiment, firstly, determining whether current weather information meets a preset weather condition; in response to that the current weather information meets the preset weather condition, extracting a plurality of the road images to be processed from the plurality of the road information to be processed. The road information to be processed includes road images to be processed and point cloud data to be processed. And then, converting the plurality of the road images to be processed respectively, and obtaining a plurality of road point cloud data. Finally, performing feature extraction on the plurality of the road point cloud data and the plurality of the point cloud data to be processed, and obtaining the road feature information. Compared with the prior art in which feature extraction is performed only according to road images, resulting in the inability to precisely obtain road feature information, in this embodiment, feature extraction is performed on multiple road information to be processed according to current weather information, thereby achieving precise acquisition of road feature information.

In addition, the embodiment of the present application also proposes a storage medium, a high-precision road map generation program is stored on the storage medium, and the method for generating the high-precision road map described above are implemented when the high-precision road map generation program is executed by a processor

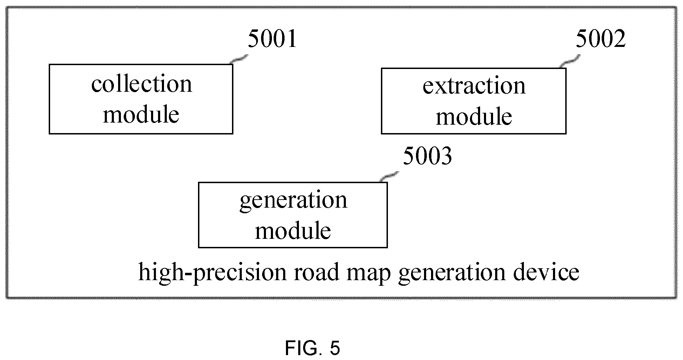

Referring to FIG. 5, which is a structural block diagram of a high-precision road map generation device according to the first embodiment of the present application.

As shown in FIG. 5, a high-precision road map generation device proposed in the embodiment of the present application includes: a collection module 5001, an extraction module 5002 and a generation module 5003.

The collection module 5001 is configured to collect a plurality of road information to be processed.

It is easy to understand that the execution subject of this embodiment can be a high-precision road map generation equipment with functions such as data processing, network communication and program running, or other computer equipment with similar functions, etc., and this embodiment does not limit it.

The multiple road information to be processed are road images or road point cloud data collected by multiple different sensors. The multiple different sensors can be single visual sensor or multiple visual sensors, single high-process wire beam laser radar or multiple high-process wire beam laser radars, millimeter wave radars, etc.

The road information collected by the visual sensor is a road image, and the road information collected by the laser radar or millimeter wave radar is road point cloud data, etc.

In this embodiment, in order to unify the sampling frequency of multiple different sensors, the processing method for collecting the plurality of the road information to be processed can be: in response to receiving a sensor control instruction, determining an information collection timestamp according to the sensor control instruction; and collecting the plurality of the road information to be processed according to the information collection timestamp.

The sensor control instruction can be understood as a control instruction generated by unifying the sampling frequencies of multiple different sensors by triggering and timing according to inertial navigation auxiliary information using the Global Positioning System (GPS) and the Inertial Measurement Unit (IMU).

In a specific implementation, the processing method of collecting the plurality of the road information to be processed according to the information collection timestamp is: collecting a plurality of initial road information according to the information collection timestamp; obtaining road sampling frequency information corresponding to each initial road information respectively; determining whether the road sampling frequency information meets a preset frequency condition; and in response to that the road sampling frequency information meets the preset frequency condition, treating the plurality of the initial road information as the plurality of the road information to be processed. The preset frequency condition can be understood that the road sampling frequency information corresponding to multiple different sensors is consistent.

Information collection timestamp can be understood as the information collection setting time, etc. In this implementation, there are three ways to collect road information: first, using a single visual sensor or multiple visual sensors to collect road information; second, using a single high-process wire beam laser radar or multiple high-process wire beam laser radars to collect road information; third, using a variety of different sensors (laser radar, 4D millimeter wave radar, visual sensor, etc.) to collect road information. The high-precision map produced by the multi-sensor fusion solution has a natural accuracy advantage. By using the complementary advantages of different sensors, different road features can be collected. The high-precision map produced will be faster and more precise when the autonomous driving system performs positioning and feature matching.

In the specific implementation, in response to that the road sampling frequency information does not meet the preset frequency condition, adjusting the road sampling frequency information according to a preset rule, and obtaining target sampling frequency information; and then, collecting the plurality of the road information to be processed according to the target sampling frequency information. The preset rule can be triggered by using GPS and IMU, and timing multiple different sensors. It should also be understood that the multi-sensor spatiotemporal synchronization mechanism can ensure the synchronization and real-time performance of data for multiple sensors even when the sampling frequencies are different.

The extraction module 5002 is configured to perform feature extraction on the plurality of the road information to be processed and obtain road feature information.

In this embodiment, in order to obtain more accurate road feature information, the performing feature extraction on the plurality of the road information to be processed, and obtaining the road feature information may be: determining whether current weather information meets a preset weather condition; in response to that the current weather information meets the preset weather condition, extracting a plurality of the road images to be processed from the plurality of the road information to be processed. The road information to be processed includes road images to be processed and point cloud data to be processed. After that, converting the plurality of the road images to be processed respectively, and obtaining corresponding multiple road point cloud data. Finally, performing feature extraction on the plurality of the road point cloud data and the plurality of the point cloud data to be processed, and obtaining the road feature information.

The preset weather condition can be understood as the current weather information being sunny weather information. It should be understood that when the current weather information is sunny weather information, the collected multiple road information to be processed can be converted into corresponding point cloud data, so as to obtain more accurate road feature information according to the point cloud data.

The generation module 5003 is configured to generate a high-precision road map according to the road feature information, vehicle body posture control information of a vehicle and mileage information.

It should be noted that the road feature information contains multiple lane line feature information, multiple bilateral road building feature information, and multiple road obstacle information. After that, the multiple lane line feature information, multiple bilateral road building feature information, and multiple road obstacle information can be fused or complemented to obtain the integrated road feature information. Then, generating the high-precision road map according to the integrated road feature information, the vehicle body posture control information of the vehicle and the mileage information.

For example, the road feature information exists missing lane line feature information A1 and missing lane line feature information A2, and the missing lane line feature information A1 and the missing lane line feature information A2 belong to the same lane line, but the missing positions are different. The missing lane line feature information A1 and the missing lane line feature information A2 can be complemented and fused to obtain the complete lane line feature information A.

It should also be noted that the vehicle can be understood as an autonomous driving vehicle, and the vehicle body posture control information can be vehicle data generated by the vehicle during autonomous driving, such as vehicle acceleration and vehicle acceleration direction. The mileage information of the vehicle can be the mileage information provided by connecting the vehicle data channel and then connecting the mileage meter from the vehicle Controller Area Network (CAN) or related domain controller for the high precision map acquisition system.

In a specific implementation, the vehicle body posture control information of the vehicle can also be obtained by connecting the vehicle data channel and then connecting the mileage meter from the vehicle CAN port or related domain controller. By connecting the high precision map and the vehicle via the data communication interface with the vehicle, on the one hand, partial information of the vehicle can be double-checked with real-time acquisition, and on the other hand, multi-source information can be added to the system by using the mileage meter.

In this embodiment, determining predicted vehicle body posture control information of the vehicle according to the vehicle body posture control information and the mileage information; determining inertial navigation auxiliary information of the vehicle according to the predicted vehicle body posture control information; and it can generate the high-precision road map according to the road feature information and the inertial navigation auxiliary information.

Predicted vehicle body posture control information can be understood as predicting the posture of the vehicle in advance according to mileage information and vehicle body posture control information of the vehicle. The inertial navigation auxiliary information is auxiliary information provided to the inertial navigation system according to the advance prediction of the vehicle's posture.

Referring to FIG. 3, which is a map update principle diagram of the method for generating the high-precision road map according to the first embodiment of the present application. FIG. 3 includes a constant temperature control system, a sensor data collection module, a controller data processing module, a vehicle data collection module, a GPS-IMU (Global Positioning System-Inertial Measurement Unit), a data storage module, an online mapping module, and an offline mapping module. The constant temperature control system can ensure the overall temperature and operating efficiency of the system, etc. The constant temperature control system adds a heating wire, a cooling system, a multi-point temperature detector, etc., so that different sensors can operate at a suitable temperature without being affected by the environment. The vehicle data collection module can obtain the vehicle body posture control information and mileage information of the vehicle. The controller data processing module includes data processing, sensor timing, map drawing, map update, management of multi-sensor power supply and constant temperature system power supply, etc. A display system can also be added to view the collected content in real time so that engineers can help with process revision and correction, etc. An online mapping channel (high-precision map) can be added, thus, not only can the road features be stored and transferred by hard disk for offline mapping, but also mapping while collecting the map by online channels. The sensor data collection module includes high-beam laser radar, visual camera, 4D millimeter wave radar, V2X information, etc., which can realize the collection of road information such as visual features, laser point cloud features, millimeter wave radar features, etc., thus collecting road section information in multiple dimensions, and establishing more comprehensive high-precision map feature information.

It should also be noted that if the background needs to update the map in real time, it is necessary to update the original map previously obtained according to the constant temperature control system, the sensor data collection module, the controller data processing module, vehicle data collection module, GPS-IMU, and data storage module.

In this embodiment, firstly, collecting a plurality of road information to be processed; performing feature extraction on the plurality of the road information to be processed, and obtaining road feature information; and then, generating a high-precision road map according to the road feature information, vehicle body posture control information of a vehicle and mileage information. The prior art performs vehicle positioning based on a high-precision positioning system composed of a satellite positioning system and an inertial navigation system, but this method may result in inaccurate vehicle positioning. Compared with the prior art, in this embodiment, performing feature extraction according to the collected road information to be processed to obtain road feature information, and then generating a high-precision road map according to the road feature information, vehicle body posture control information of a vehicle and mileage information, so that the autonomous driving vehicle can be precisely positioned based on the high-precision road map, thereby improving the driver's experience of autonomous driving.

For other embodiments or specific implementations of the high-precision road map generation device of the present application, reference may be made to the above method embodiments, which will not be described again here.

It should be noted that, as used herein, the terms "comprise", "include" or any other variations thereof are intended to cover a non-exclusive inclusion, such that a process, method, article or device that includes a list of elements includes not only those elements, but also other elements not expressly listed or elements inherent to such a process, method, article or device. Without further limitation, an element defined by the statement "comprises a/an......" does not exclude the existence of other identical elements in the process, method, article or device including this element.

The above serial numbers of the embodiments according to the present application are only for description and do not represent the advantages or disadvantages of the embodiments.

Through the above description of the embodiments, those skilled in the art can clearly understand that the methods of the above embodiments can be implemented by means of software plus the necessary general hardware platform, it can also be implemented by hardware certainly, but in many cases the former is a better implementation. Based on this understanding, the technical solution of the present application is essentially or the part that contributes to the existing technology can be embodied in the form of software products. The computer software product is stored in a storage medium (such as ROM/RAM, magnetic disk and CD), and includes several instructions to cause an terminal device (which can be a mobile phone, a computer, a server, an air conditioner, or a network device and so on) to execute the methods described in various embodiments according to the present application.

The above are only some embodiments of the present application, and are not intended to limit the scope of the present application. Any equivalent structures or equivalent process transformations made using the contents of the description and accompanying drawings of the present application, or directly or indirectly applied in other related technical fields, are all similarly included in the scope of the present application.

## Claims

1. A method for generating a high-precision road map, **characterized by** comprising:
collecting a plurality of road information to be processed;
performing feature extraction on the plurality of the road information to be processed, and obtaining road feature information; and
generating a high-precision road map according to the road feature information, vehicle body posture control information of a vehicle and mileage information.

2. The method for generating the high-precision road map according to claim 1, wherein the collecting the plurality of the road information to be processed comprises:
in response to receiving a sensor control instruction, determining an information collection timestamp according to the sensor control instruction; and
collecting the plurality of the road information to be processed according to the information collection timestamp.

3. The method for generating the high-precision road map according to claim 2, wherein the collecting the plurality of the road information to be processed according to the information collection timestamp comprises:
collecting a plurality of initial road information according to the information collection timestamp;
obtaining road sampling frequency information corresponding to each initial road information respectively;
determining whether the road sampling frequency information meets a preset frequency condition; and
in response to that the road sampling frequency information meets the preset frequency condition, treating the plurality of the initial road information as the plurality of the road information to be processed.

4. The method for generating the high-precision road map according to claim 3, wherein after the determining whether the road sampling frequency information meets the preset frequency condition, the method further comprises:
in response to that the road sampling frequency information does not meet the preset frequency condition, adjusting the road sampling frequency information according to a preset rule, and obtaining target sampling frequency information; and
collecting the plurality of the road information to be processed according to the target sampling frequency information.

5. The method for generating the high-precision road map according to any one of claims 1 to 4, wherein the road information to be processed comprises road images to be processed and point cloud data to be processed;
the performing feature extraction on the plurality of the road information to be processed, and obtaining the road feature information comprises:
determining whether current weather information meets a preset weather condition;
in response to that the current weather information meets the preset weather condition, extracting a plurality of the road images to be processed from the plurality of the road information to be processed;
converting the plurality of the road images to be processed respectively, and obtaining a plurality of road point cloud data; and
performing feature extraction on the plurality of the road point cloud data and the plurality of the point cloud data to be processed, and obtaining the road feature information.

6. The method for generating the high-precision road map according to claim 5, wherein after the determining whether the current weather information meets the preset weather condition, the method further comprises:
in response to that the current weather information does not meet the preset weather condition, extracting the plurality of the point cloud data to be processed from the plurality of the road information to be processed;
converting the plurality of the road images to be processed and the plurality of the point cloud data to be processed respectively, and obtaining a plurality of road pixel information; and
performing feature extraction on the plurality of the road pixel information, and obtaining the road feature information.

7. The method for generating the high-precision road map according to any one of claims 1 to 4, wherein the generating the high-precision road map according to the road feature information, the vehicle body posture control information of the vehicle and the mileage information comprises:
determining predicted vehicle body posture control information of the vehicle according to the vehicle body posture control information and the mileage information;
determining inertial navigation auxiliary information of the vehicle according to the predicted vehicle body posture control information; and
generating the high-precision road map according to the road feature information and the inertial navigation auxiliary information.

8. A high-precision road map generation device, **characterized by** comprising:
a collection module, configured to collect a plurality of road information to be processed;
an extraction module, configured to perform feature extraction on the plurality of the road information to be processed and obtain road feature information; and
a generation module, configured to generate a high-precision road map according to the road feature information, vehicle body posture control information of a vehicle and mileage information.

9. A high-precision road map generation equipment, **characterized by** comprising: a memory, a processor and a high-precision road map generation program stored in the memory and executable on the processor, and the high-precision road map generation program is configured to implement the method for generating the high-precision road map according to any one of claims 1 to 7.

10. A storage medium, **characterized in that** a high-precision road map generation program is stored on the storage medium, and the method for generating the high-precision road map according to any one of claims 1 to 7 are implemented when the high-precision road map generation program is executed by a processor.
